(19) **Europäisches Patentamt / European Patent Office / Office européen des brevets**

(11) **EP 1 330 104 B1**

(12) **FASCICULE DE BREVET EUROPEEN**

(45) Date de publication et mention
de la délivrance du brevet:
**05.10.2011  Bulletin 2011/40**

(51) Int Cl.:
***H04M 11/06*** *(2006.01)*

(21) Numéro de dépôt: **03100063.1**

(22) Date de dépôt: **15.01.2003**

(54) **Dispositif de filtrage passe-bas avec dispositif d'isolation et circuit de dérivation**

Tiefpassfiltervorrichtung mit Isolation und Bypass-Schaltung

Low-pass filter device comprising isolation and bypass circuit

(84) Etats contractants désignés:
**AT BE BG CH CY CZ DE DK EE ES FI FR GB GR
HU IE IT LI LU MC NL PT SE SI SK TR**

(30) Priorité: **16.01.2002  FR 0200513**

(43) Date de publication de la demande:
**23.07.2003  Bulletin 2003/30**

(73) Titulaire: **Laboratoire Europeen ADSL Leacom
Fastnet
92400 Courbevoie (FR)**

(72) Inventeurs:
• **Cazalet, Alain
35200, Rennes (FR)**
• **Fernandez, Thierry
92400, Courbevoie (FR)**

(74) Mandataire: **Schmit, Christian Norbert Marie et al
SCHMIT CHRETIEN
8, place du Ponceau
95000 Cergy (FR)**

(56) Documents cités:
**WO-A-01/06737     WO-A-00/065819**

EP 1 330 104 B1

**Description**

La présente invention a pour objet un dispositif de filtrage passe-bas particulier destiné à être utilisé sur des voies xDSL. Elle peut être incorporée notamment dans un dispositif séparateur de signaux voix-données pour une transmission sur des voies xDSL. Par voie xDSL, on désigne l'ensemble des canaux physiques susceptibles de transmettre des signaux téléphoniques dits basse fréquence et des signaux xDSL. L'invention propose une nouvelle conception des dispositifs de filtrages intervenant dans les différentes mises en oeuvre des technologies xDSL, qui permet notamment d'améliorer la performance de ces dispositifs de filtrage en terme de transmission de certains signaux, notamment les signaux de sonnerie ou des signaux dits de service, tout en maintenant en permanence des caractéristiques d'impédance satisfaisantes dans toutes les situations.

Le dispositif selon l'invention est essentiellement destiné à être utilisé dans des installations privatives. De telles installations correspondent à des IPC (pour Infrastructure Privative Client), qui démarrent à la réglette du domicile et comprennent l'ensemble des câbles, paires de cuivre et prises téléphoniques. Elles sont raccordées à un réseau d'accès à des services bande étroite et à des services large bande. Dans la pratique, ces installations désignent essentiellement les installations téléphoniques et téléinformatiques qui sont raccordées, via une ligne téléphonique, au réseau téléphonique et qui comprennent un ou plusieurs terminaux bande étroite tels que, par exemple, les postes téléphoniques, les fax ou les modems, et un terminal large bande dont le fonctionnement permet exploiter les technologies xDSL.

Le domaine de l'invention est, d'une façon générale, celui des technologies dites xDSL. Dans ces technologies, on trouve par exemple la technologie ADSL (pour Asymetric Digital Subscriber Line, en anglais, pour ligne d'abonné numérique à débit asymétrique), la technologie VDSL (pour Very-high-data rate Digital Suscriber Line, pour ligne d'abonné numérique à très haut débit), ou encore les technologies HDSL ou SDSL. L'invention sera plus particulièrement décrite, à titre d'exemple, dans le cadre de l'ADSL. Elle peut cependant également être utilisée avec les autres technologies xDSL. Ces technologies sont essentiellement mises en oeuvre sur des boucles locales des réseaux de téléphonie existant, la boucle locale étant constituée par les intermédiaires du réseau entre un central téléphonique et un poste d'abonné. Un des objectifs essentiels de ces technologies est de rendre possible, sur les boucles locales des anciens réseaux de téléphonie, la transmission simultanée de différents types de signaux : d'une part, les signaux relatifs aux conversations téléphoniques habituelles entre deux abonnés, ces premiers signaux comprenant des signaux relatifs à la voix et des signaux de signalisation, et d'autre part, des signaux relatifs à des données, typiquement des informations échangées entre un abonné et un site accessible via le réseau Internet.

Pour des transmissions selon ces technologies, on utilise donc la paire de fils de cuivre qui arrive chez l'abonné, et qui constitue depuis longtemps la ligne téléphonique, ou boucle d'abonné, à laquelle sont raccordés les différents combinés téléphoniques, également désignés comme terminaux bande étroite, de l'utilisateur des réseaux analogiques traditionnels dits POTS (pour Plain Old Telephone System - système ancien de télécommunications) ou des réseaux numériques traditionnels dits ISDN (ou RNIS - réseau numérique à intégration de services). Cette paire de fils de cuivre est le plus souvent torsadée et comporte une gaine isolante en polyéthylène.

Sur cette paire de fils de cuivre, on transmet donc à la fois :

- en bande de base, des signaux analogiques non modulés correspondant aux réseaux POTS, ou des signaux numériques correspondant aux réseaux ISDN. Les signaux analogiques en bande de base sont de fréquence typiquement 0 à 4 kHz, ou 0 à 16 KHz si on tient compte des signaux de signalisation. Les signaux numériques en bande de base sont dans des fréquences de 0 à 94 KHz. En pratique, la bande de base est destinée à une transmission en mode circuit;

- en bande haute fréquence, d'autres signaux, numériques et modulés, qui correspondent par exemple aux informations échangées avec le réseau Internet. La bande haute s'étale du dessus de la bande de base téléphonique jusqu'à 1 MHz environ. En pratique la bande haute fréquence s'étale de 26 KHz à 1,1MHz si la paire de fils de cuivre sert en bande de base pour une transmission analogique POTS, et de 138 KHz à 1,1 MHz si elle sert pour une transmission numérique. Elle est normalement destinée à une transmission permanente, en mode paquets principalement, c'est à dire qu'une communication permanente est établie entre l'abonné et le central téléphonique. On est ainsi dispensé des opérations classiques intervenant lors d'une connexion avec accès par ligne commutée, qui est une méthode de connexion temporaire à un réseau informatique consistant à utiliser un modem, un logiciel de connexion et le réseau téléphonique commuté comme moyen de mise en communication de son propre ordinateur et d'un autre ordinateur du réseau.

Bien que la bande de base puisse être utilisée, notamment avec des modems de préférence numériques, pour transmettre des données, et que la bande haute fréquence puisse servir à assurer des communications phoniques dans le cadre de communications dites communications téléphoniques sur Internet, on considérera, de façon schématique, et dans un souci de simplification des explications, que la bande de base est utilisée pour la transmission d'un premier type de signaux, essentiellement des paroles, correspondant à des communications phoniques, et que la bande haute fréquence sert pour la transmission d'un deuxième type de signaux, essentiellement des données, relatives notamment à la consultation de sites Internet.

La bande de base n'est capable que d'un faible débit (actuellement 56 Kbits/s pour les modems analogiques et 64 Kbits/s pour les modems numériques) alors que la bande haute fréquence est susceptible de présenter un haut débit (pouvant avoisiner 10 Mbits/s).

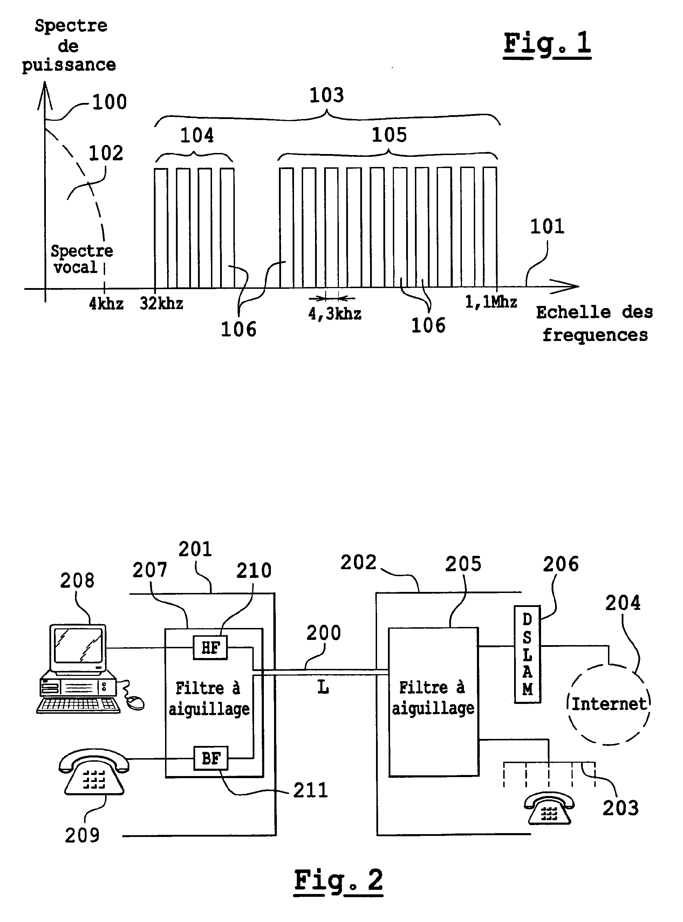

La figure 1 illustre l'exploitation de la bande de fréquence en distribution ADSL. L'axe des ordonnées 100 échelonne la puissance des signaux émis, et l'axe des abscisses 101 donne l'échelle des fréquences. Les puissances émises sont représentées de façon équirépartie dans un but de simplification. On retrouve le spectre vocal 102 s'étendant de 0 à 4 kHz, et le spectre 103 utilisé pour la transmission de données selon la technologie ADSL, ce dernier s'étendant d'environ 30 kHz à 1,1 MHz. Le spectre 103 est divisé en deux parties principales : une première bande de fréquence 104 correspondant au spectre utilisé pour les données montantes (de l'abonné vers le central) et une deuxième bande de fréquence 105 correspondant au spectre utilisé pour les données descendantes (du central vers l'abonné). La deuxième bande de fréquence 105 est plus large que la première bande de fréquence 104 car les données montantes, qui correspondent le plus souvent à des requêtes émises par un abonné, sont le plus souvent moins nombreuses que les données descendantes, qui peuvent correspondre au téléchargement de gros fichiers, des images par exemple.

L'utilisation d'une ligne dite ADSL nécessite donc de séparer la bande de base, basse fréquence, de la bande haute fréquence. La figure 2 illustre schématiquement ces séparations au niveau d'une boucle locale de communication. Sur cette figure, on a représenté une ligne téléphonique usuelle 200, ou boucle d'abonné, composée de deux fils en cuivre, qui assure la liaison entre un abonné 201, qui dispose d'une installation privative, et un central téléphonique 202.

Le central téléphonique 202 assure la connexion à un réseau de téléphonie classique 203 et à un réseau de type Internet 204. Afin de dissocier les signaux destinés au réseau téléphonique 203 et au réseau Internet 204, un premier dispositif 205 séparateur de signaux voix-données, également appelé filtre à aiguillage ou splitter, est utilisé. D'une façon générale, un splitter est un dispositif électronique associé à un modem ADSL qui permet de séparer les signaux de la voix des signaux de données et de les acheminer sur deux voies différentes. Le splitter 205 sera désigné par la suite comme splitter central.

Le splitter central 205 est le plus souvent incorporé dans une carte de splitters, cette carte pouvant comporter jusqu'à quelques dizaines de splitters centraux. Il a pour fonction de séparer les signaux de données, qui sont orientés vers le réseau Internet 204, et les signaux de voix, qui sont orientés vers les réseaux de téléphonie classiques 203. Une autre fonction du splitter central 205 est de multiplexer les signaux de voix, émis par les réseaux de téléphonie classiques 203, et les signaux émis par un multiplexeur d'accès 206 ultérieurement détaillé, afin de les acheminer sur la même paire torsadée 200. En théorie, on trouve dans le splitter central 205 un filtre basse fréquence et un filtre haute fréquence, qui laissent passer respectivement les signaux phoniques et les signaux ADSL. La conception du splitter central 205 doit être telle que les services téléphoniques classiques des réseaux POTS et/ou ISDN ne soient pas perturbés par la présence des signaux ADSL, et que le flux de données des signaux ADSL ne soit pas affecté par certaines opérations classiques observables sur ces réseaux, notamment les opérations de décroché/raccroché.

Les données destinées au - ou provenant du - réseau Internet 204 transitent par un multiplexeur d'accès DSL 206, appelé DSLAM, qui est relié au splitter central 205. Un DSLAM (pour Digital Subscriber Line Access Multiplexer en anglais) est un multiplexeur d'accès, conçu spécialement pour les équipements DSL, habituellement situé dans les locaux des centraux téléphoniques, qui transmet les signaux sur Internet en utilisant une technique de multiplexage temporel.

Du côté de l'abonné 201, on trouve également un splitter 207 relié à la ligne téléphonique 200. Le splitter 207 est appelé splitter maître. Quand plusieurs téléphones sont connectés à la même ligne, chacun d'entre eux doit être protégé par un filtre passe-bas. Dans ce dernier cas, on utilise des filtres de protections d'ordre 2 ou 3 à faible coût. La simplicité de réalisation et la compacité de ces filtres les a consacrés sous l'appellation micro-filtres. Le splitter maître 207 a aussi pour fonction de séparer les signaux de données, qui sont orientés vers un ordinateur personnel 208 associé à un modem ADSL, et les signaux de voix, qui sont orientés vers des combinés téléphoniques classiques 209. En théorie, on trouve également dans le splitter maître 207 un filtre basse fréquence et un filtre haute fréquence, qui laissent passer respectivement les signaux phoniques et les signaux ADSL. La conception du splitter maître 207 doit être telle que, comme pour le splitter central 205, il doit pouvoir éviter tout phénomène d'interférence ou d'altération, pour chaque type de signaux, qui pourrait être causé par l'autre type de signaux.

Dans la pratique, le filtre basse fréquence du splitter et le filtre haute fréquence sont séparés et distincts. Sur la figure, ces filtres sont représentés uniquement du côté abonné. Le filtre haute fréquence 210, c'est à dire le filtre qui laisse passer les signaux de données et uniquement ceux-là, est disposé entre la ligne téléphonique 200 et le DSLAM 206 (côté central téléphonique) et entre la ligne téléphonique 200 et l'ordinateur personnel 208 (côté abonné). Le filtre haute fréquence 210 peut être incorporé, partiellement ou totalement, dans un modem ADSL. Le filtre basse fréquence 211 est, pour sa part, disposé entre la ligne téléphonique 200 et le réseau de téléphonie classique 203 (côté central téléphonique) et entre la ligne téléphonique 200 et les combinés téléphoniques classiques 209 (côté abonné).

Chaque filtre sert à isoler l'installation qu'il relie des signaux destinés à l'autre installation. Notamment, le filtre basse fréquence 211 sert à empêcher que les signaux phoniques soient perturbés par les signaux de données. Par abus de langage, on appelle de tels filtres basse fréquence également des "splitters" dans la mesure où le filtre passe-haut nécessaire au modem est intégré dans ce même modem. De tels filtres dénommés souvent micro-filtres sont incorporés dans des dispositifs de filtrage objet de l'invention.

L'installation des filtres, et notamment des filtres passe-bas, doit satisfaire à plusieurs contraintes :

- le respect de valeurs d'impédances d'entrée et de sortie imposées. Afin que la puissance transmise par la ligne téléphonique le soit avec le meilleur rendement possible, les lignes téléphoniques doivent être caractérisées, en entrée et en sortie, par une impédance ayant une valeur aussi proche que possible de l'impédance complexe caractéristique de la ligne téléphonique. L'introduction de filtres sur la ligne téléphonique doit respecter ce principe. On appelle Zc une telle impédance caractéristique. Dans la pratique Zc est une valeur imposée par une norme, la norme en question pouvant être différente d'un pays à l'autre, même si les impédances concernées ont des valeurs sensiblement comparables. On trouve ainsi notamment l'impédance européenne harmonisée, l'impédance anglaise, l'impédance allemande, et deux impédances américaines dites à 600 ohms et 900 ohms respectivement. Les différences entre ces impédances dépendent notamment du diamètre des fils de cuivre utilisés, de l'isolant et du pas des torsades.
- le facteur dit d'affaiblissement d'insertion, ou ILF (pour Insertion Loss Factor en anglais), qui mesure un affaiblissement de puissance d'une voie de transmission lorsqu'il s'y trouve des montages en pont, des filtres, des égaliseurs ou d'autres montages. Dans le cas présent, ce facteur mesure la perte de transmission occasionnée dans le circuit par la mise en place d'un filtre, entre une situation où le filtre n'est pas présent et une situation où il est mis en place ; selon les différentes normes en vigueur, lorsque l'impédance caractéristique est purement résistive, la perte doit être inférieure à 0,3 dB ; pour les impédances complexes, la perte d'insertion doit être inférieure à 1 dB.
- le facteur dit d'affaiblissement de réflexion, ou RLF (pour Return Loss en anglais), qui est une mesure liée à la puissance de signal réfléchi par rapport à la puissance de signal transmissible. Il s'exprime par la formule suivante :

$$RLF = 20 \log 10 \, abs(((Zin(w)+Zc(w)) \, / \, ((Zin(w)-Zc(w)))),$$

où Zin(w) mesure l'impédance d'entrée du dispositif dont on veut mesurer le RLF, et où Zc(w) est l'impédance d'une charge de référence. On voit clairement que le Return Loss correspond à une mesure d'adaptation d'impédance. Lorsque l'adaptation est parfaite (Zin(w)=Zc(w)), le Return Loss tend vers l'infini. Dans les normes, l'affaiblissement de réflexion pour un filtre basse fréquence doit être supérieur à environ 18 dB dans la bande de base utile (300 - 3400 Hz en réseau POTS, et 300 - 94000 Hz en réseau ISDN).

Lors de l'insertion d'un dispositif de filtrage, tel que celui qui fait l'objet de la présente invention, sur la ligne téléphonique, il convient de s'assurer que les impédances d'entrée et de sortie du dispositif de filtrage soient suffisamment proches de l'impédance caractéristique de ligne. On assure ainsi une meilleure transmission et l'on minimise chez l'abonné le phénomène d'écho local. Dans le cas où on introduit un unique dispositif de filtrage, c'est à dire lorsque l'abonné ne dispose que d'un terminal bande étroite du type téléphone classique, il est facile de concevoir le dispositif de filtrage pour que l'impédance du filtre vue depuis le central téléphonique lorsque le terminal est dans un état décroché, qui correspond à l'impédance d'entrée du filtre, soit approximativement égale à l'impédance caractéristique Zc au moins dans la partie basse du spectre des fréquences de communication, c'est à dire entre environ 300 Hz et 4 kHz.

Mais lorsque le terminal bande étroite est dans un état raccroché, l'impédance d'entrée du terminal bande étroite, vue depuis le côté central téléphonique, ne correspond pas à une très haute impédance : elle n'est plus de l'ordre de 5 Mégaoms en parallèle avec 1 nanofarad (modèle d'impédance d'un téléphone raccroché), comme elle devrait l'être en l'absence du filtre ; en effet, du fait de l'introduction du filtre, elle correspond à l'impédance d'entrée du filtre. Lorsqu'un téléphone décroché est mis en parallèle avec plusieurs téléphones raccrochés (ceux-ci étant isolés par des micro-filtres), et même si l'impédance d'entrée individuelle du micro-filtre associé au téléphone décroché est adaptée à l'impédance caractéristique, la mise en parallèles des impédances d'entrée des micro-filtres associées aux téléphones raccrochés va désadapter l'impédance d'entrée vis à vis de l'impédance caractéristique. Cette désadaptation est d'autant plus grande que le nombre de téléphones raccrochés est grand.

Il est donc nécessaire de prévoir, dans les dispositifs de filtrage basse fréquence qui sont disposés devant (vue depuis le côté central téléphonique) chaque terminal bande étroite, un dispositif d'isolation qui permet d'isoler de la ligne téléphonique ces terminaux de telle sorte que chacun présente une très haute impédance d'entrée lorsqu'ils sont dans un état raccroché. Leur admittance, dans un état raccroché, est alors négligeable. Les différents terminaux bande étroite étant disposés en parallèle sur la ligne téléphonique, lorsqu'un d'eux est décroché, de tels dispositifs d'isolation permettent de maintenir la ligne téléphonique adaptée à l'impédance caractéristique.

Dans l'état de la technique, de tels dispositifs d'isolation ont déjà été proposés. Mais ils étaient basés uniquement sur des composants qui provoquaient des chutes de tension importantes, pouvant aller jusqu'à 32 volts, sur la ligne téléphonique. La batterie du côté central téléphonique assurant une tension de 48 volts seulement, on comprend bien que ces dispositifs ne pouvaient pas être performants, un grand nombre de signaux, y compris les signaux de parole, risquant alors de ne plus être transmis de façon satisfaisante aux terminaux bande étroite de l'abonné.

Dans l'état de la technique, on connaît l'enseignement du document WO 00/65819 qui divulgue un dispositif de filtrage passe-bas ave isolateur intégré et une installation privative comportant un tel dispositif.

Dans l'art antérieur, on connaît également l'enseignement du document WO 01/06737 qui divulgue un filtre passe-bas d'ordre impair se trouvant entre un réseau de câblage téléphonique local et un dispositif POTS, ou dispositif à bande vocale, et servant à séparer des signaux vocaux de signaux à fréquence plus élevée, tels que des signaux ADSL et des signaux de réseau domestique.

Par ailleurs, un nouveau problème apparaît lorsque des dispositifs d'isolation sont installés: si l'impédance série des dispositifs d'isolation incorporés dans les dispositifs de filtrage passe-bas est trop importante dans un état raccroché, de nombreux signaux tels que les signaux de service, et éventuellement les signaux de sonnerie, ne peuvent plus parvenir aux terminaux téléphoniques ainsi isolés. Or ces signaux de service, qui véhiculent notamment les services de notification de message ou d'identification de l'appelant, doivent être transmis aux terminaux bande étroite quand ceux-ci sont dans un état raccroché. Il est donc nécessaire de prévoir des dispositifs de dérivation pour faire parvenir ces signaux jusqu'aux terminaux basse fréquence.

La présente invention permet de pallier l'ensemble des problèmes qui viennent d'être exposés. En effet, dans l'invention, on prévoit notamment un dispositif d'isolation qui permet de faire prendre au filtre une très haute valeur d'impédance quand les terminaux auxquels ils sont rattachés sont dans un état raccroché, tout en ne provoquant pas de trop grande perte de tension lorsque, quand les terminaux sont dans un état décroché, des signaux sont amenés à traverser ces dispositifs d'isolation. A cet effet, le dispositif de filtrage met en oeuvre des dispositifs non linéaires faisant intervenir des groupes de composants comportant par exemple des triacs. Par ailleurs, le dispositif de filtrage selon l'invention prévoit un dispositif de dérivation pour transmettre aux terminaux basse fréquence des signaux de service lorsque ces terminaux sont dans un état raccroché, le dispositif selon l'invention étant peu coûteux du fait de sa structure et des composants qu'il comporte.

L'invention concerne donc essentiellement un dispositif de filtrage pour un terminal bande étroite dans une installation privative, raccordée par une ligne téléphonique composée d'une première ligne de transmission et d'une deuxième ligne de transmission, à un réseau d'accès susceptible de faire circuler simultanément, entre un central téléphonique et un abonné équipé d'au moins un terminal bande étroite, des premiers signaux correspondant à des services bande étroite analogique et/ou numérique, et des seconds signaux correspondant à des services large bande, ledit dispositif comportant des moyens de filtrage passe-bas, des moyens d'isolation tels que le dispositif a une haute impédance d'entrée pour être isolé du réseau lorsque le terminal bande étroite est dans un état raccroché, et des moyens de dérivation pour laisser passer des signaux de sonnerie et/ou de service lorsque le terminal bande étroite est dans un état raccroché caractérisé en ce que les moyens d'isolation comportent des groupes de composants pour provoquer une chute de tension sur la ligne téléphonique inférieure à quatre volts, les groupes de composants pouvant par exemple être des dispositifs non linéaires, chacun incorporant par exemple notamment un triac.

Dans un exemple particulier de réalisation les dispositifs non-linéaires sont au nombre de quatre, disposés sur chacune des lignes de transmission en série et de façon symétrique par rapport à une capacité, ladite capacité étant disposée sur une liaison reliant la première ligne de transmission et la deuxième ligne de transmission. La gâchette de chaque triac peut par exemple être constituée d'une liaison qui est connectée à une sortie du triac et qui comporte deux diodes zéner tête-bêche et d'une résistance d'entrée.

Dans un mode de réalisation possible du dispositif de filtrage selon l'invention, les moyens de dérivation peuvent être constitués d'un premier module de dérivation et d'un deuxième module de dérivation, disposés respectivement sur la première ligne de transmission et sur la deuxième ligne de transmission, chaque module de dérivation pouvant comporter une première ligne de dérivation comprenant une première résistance de dérivation et une deuxième ligne de dérivation comprenant une deuxième résistance de dérivation en série avec une capacité de dérivation, les lignes de dérivation étant disposées en parallèle avec les moyens d'isolation sur chaque ligne de transmission.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :

- Figure 1, déjà décrite, une représentation de l'exploitation de la bande de fréquence en distribution ADSL ;
- Figure 2, déjà décrite, une illustration du principe de la séparation des signaux basse fréquence et haute fréquence sur une ligne ADSL ;
- Figure 3, un exemple de réalisation préféré du dispositif de filtre passe-bas selon l'invention.

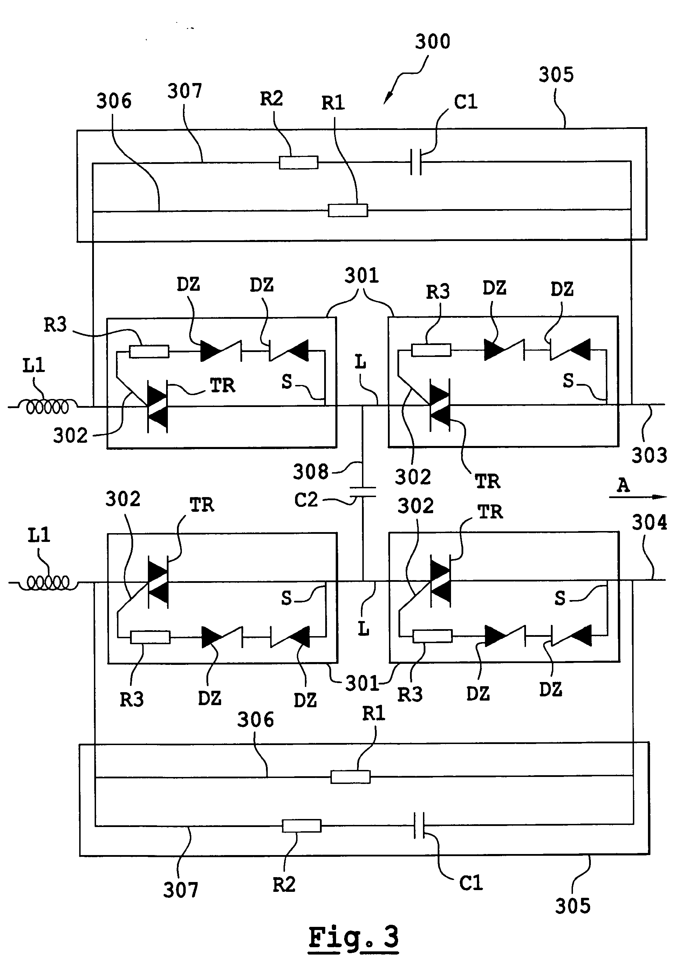

A la figure 3, un dispositif de filtrage 300 selon l'invention est représenté. Une ligne téléphonique L permet de relier un central téléphonique C à un abonné A. Le dispositif de filtrage 300 est positionné du côté de l'abonné avant chaque terminal bande étroite dont ce dernier dispose. Trois éléments essentiels constituent ce dispositif de filtrage : le filtre en lui-même, un dispositif d'isolation et un circuit de dérivation. Dans le mode de réalisation présenté à la figure 3, le filtre et le dispositif d'isolation sont imbriqués l'un dans l'autre.

Le filtre donné à titre d'exemple est constitué d'une première inductance et d'une deuxième inductance L1 qui, pour respecter la symétrie de la ligne téléphonique L, sont disposées respectivement sur une première ligne de transmission 303 TIP et sur une deuxième ligne de transmission 304 RING. Le filtre comporte également une capacité dite capacité de filtre C2 qui est disposée sur une liaison 308 reliant la première ligne de transmission 303 et la deuxième ligne de transmission 304. Le filtre ainsi constitué est donc un filtre du second ordre. Le dispositif selon l'invention peut également être réalisé avec des filtres différents, notamment des filtres d'un ordre supérieur.

Le dispositif d'isolation est composé de groupes de composants qui sont répartis sur la ligne téléphonique L. En l'occurrence, on trouve dans l'exemple décrit, quatre groupes de composants 301 qui sont répartis de façon symétrique autour de la capacité de filtre C2 : deux de ces groupes 301 sont disposés sur la première ligne de transmission 303 de part et d'autre du point de connexion entre la liaison 308 et la première liaison de transmission 303, les deux autres groupes de composants 301 étant disposés sur la deuxième ligne de transmission 304 de part et d'autre du point de connexion entre la liaison 308 et la deuxième liaison de transmission 304.

Les groupes de composants 301 sont des dispositifs non linéaires identiques. Ils sont pour chacun composés d'un triac TR, directement placé sur la ligne de transmission sur laquelle se trouve le dispositif non linéaire auquel il appartient et d'une liaison 302 qui constitue la gâchette du triac TR. La liaison 302 relie la sortie du triac à une entrée de celui-ci constituant la gâchette. La liaison 302 comporte notamment deux diodes Zener DZ positionnées tête-bêche et, entre les diodes Zener et la gâchette du triac TR, une résistance dite résistance d'entrée R3.

Dans un mode de réalisation particulier, le triac TR est choisi avec une gâchette très sensible. Les diodes Zener DZ sont les éléments qui définissent le seuil de tension de déclenchement du triac TR. Dans un exemple de réalisation, les diodes Zener utilisées sont des diodes présentant une tension de claquage de 2,7 volts, et la résistance d'entrée R3 a une valeur, à plus ou moins dix pour cent, de 2,2 kiloOhms (ou éventuellement 4,7 kiloOhms dans un autre mode de réalisation). Le triac TR se déclenche avec un courant de gâchette de l'ordre de 1 milliAmpère.

Lorsqu'un terminal bande étroite, auquel le dispositif de la figure 3 est rattaché, de l'abonné est dans un état raccroché, les triacs TR assurent l'isolation du terminal bande étroite. Vu depuis le central téléphonique C, le terminal bande étroite considéré présente alors une très haute impédance. Par ailleurs, lorsque les triacs passent d'un état bloqué, déclenché, interdisant le passage des différents signaux, et notamment des signaux de service, à un état enclenché, autorisant le passage de ces signaux, les différents signaux circulant via les triacs sur la ligne téléphonique, seront, du fait des caractéristiques structurelles des triacs, soumis à une baisse de tension de qui ne sera que de l'ordre de 0,6 volts par triac traversé. Cette baisse de tension est négligeable et n'altère en rien la transmission des signaux.

D'une façon plus générale, les dispositifs de filtrage selon l'invention font intervenir des blocs d'isolation comportant des composants électroniques tels que la chute de tension maximale totale que ces blocs provoquent n'excèdent pas une tension maximale égale à quatre volts.

Les moyens de dérivation du dispositif du dispositif de la figure 3 sont constitués par un premier module de dérivation et un deuxième module de dérivation 305 qui sont respectivement reliés à la première ligne de transmission 303 et à la deuxième ligne de transmission 304. Les modules de dérivation 305 sont disposés en parallèle avec les dispositifs non linéaire d'isolation sur la ligne téléphonique L. Ils sont donc connectés, sur chaque ligne de transmission, entre un point situé entre l'inductance L1 et le premier dispositif non linéaire 301 disposé sur la ligne considérée, et un point situé entre le terminal basse fréquence de l'abonné et le deuxième dispositif non linéaire 301 disposé sur la ligne considérée.

Chaque module de dérivation est composé d'une première ligne de dérivation 306 comportant une première résistance de dérivation R1 et d'une deuxième ligne de dérivation 307, en parallèle avec la première ligne de dérivation 306, qui comporte en série une deuxième résistance de dérivation R2 et une capacité dite capacité de dérivation C1. Typiquement, les valeurs des composants utilisés dans les modules de dérivation sont les suivantes :

- R1=100 kiloohms ;
- R2=10 kiloohms ;
- C1= 150 nanofarads (400 Volts).

Ces valeurs ne constituent que des exemples de réalisation. Une variation de plus ou moins dix pour cent est tout à fait acceptable. Avec de tels ordres de grandeur pour ces valeurs, le signal de sonnerie est transmis sans problème via la première ligne de dérivation 306, l'impédance de cette ligne n'étant pas trop élevée, et en tout état de cause beaucoup moins élevée que celle des dispositifs non linéaires, pour interdire le passage de ces signaux.

Les signaux de service, pour leur part, sont transmis via la deuxième ligne de dérivation 307. En effet, pour ces signaux, qui sont typiquement centrés sur une fréquence voisine de 2,5 kHz, l'impédance due à la capacité de dérivation C1 est négligeable. La valeur de la deuxième résistance de dérivation R2 étant très inférieure à la valeur de la première résistance de dérivation R1, les signaux de service empruntent donc la deuxième ligne de service 307. Ce n'est pas le cas pour les signaux de sonnerie, car, ces signaux ayant une fréquence de 25 Hz, l'impédance due à la capacité de dérivation C1 n'est pas négligeable.

Une telle architecture des modules de dérivation 305 permet d'utiliser uniquement des composants peu coûteux, et notamment des capacités de faible valeur.

A titre d'exemple de réalisation les valeurs suivantes peuvent être attribuées, à plus ou moins dix pour cent, à certains composants du dispositif de la figure 3 :

$$L1 = 10 \text{ milliHenry} ;$$

$$C2 = 47 \text{ nanoFarads (400 Volts)}.$$

## Revendications

1. Dispositif de filtrage (300) pour un terminal bande étroite dans une installation privative, raccordée par une ligne téléphonique (L) composée d'une première ligne de transmission (303) et d'une deuxième ligne de transmission (304), à un réseau d'accès susceptible de faire circuler simultanément, entre un central téléphonique (C) et un abonné (A) équipé d'au moins un terminal bande étroite, des premiers signaux correspondant à des services bande étroite analogique et/ou numérique, et des seconds signaux correspondant à des services large bande, ledit dispositif (300) comportant des moyens de filtrage passe-bas (L1 ;C2), des moyens d'isolation (301) tels que le dispositif (300) a une haute impédance d'entrée pour être isolé du réseau lorsque le terminal bande étroite est dans un état raccroché, et des moyens de dérivation (305) pour laisser passer des signaux de sonnerie et/ou de service lorsque le terminal bande étroite est dans un état raccroché, les moyens d'isolation (301) comportent des groupes de composants (DZ ;R3 ;TR) adaptés à provoquer une chute de tension sur la ligne téléphonique (L) inférieure à quatre volts,

   **caractérisé en ce que**

   - lesdits groupes de composants sont des dispositifs non linéaires identiques incorporant chacun
   - un triac (TR) directement placé sur la ligne de transmission sur laquelle se trouve ledit dispositif non linéaire auquel il appartient, et,
   - mise en parallèle avec ledit triac, une liaison (302) reliant une sortie dudit triac à une entrée dudit triac, ladite liaison constituant une gâchette sensible dudit triac, ladite liaison comportant deux diodes Zener (DZ) tête-bêche et une résistance d'entrée (R3).

2. Dispositif (300) selon la revendication précédente, **caractérisé en ce que** les dispositifs non linéaires sont au nombre de quatre, disposés sur chacune des lignes de transmission (303 ; 304) en série et de façon symétrique par rapport à une capacité (C2) des moyens de filtrage passe-bas, ladite capacité (C2) étant disposée sur une liaison (308) reliant la première ligne de transmission (303) et la deuxième ligne de transmission (304).

3. Dispositif (300) selon l'une des revendications précédentes, **caractérisé en ce que** les moyens de dérivation (305) sont constitués d'un premier module de dérivation et d'un deuxième module de dérivation, disposés respectivement sur la première ligne de transmission (303) et sur la deuxième ligne de transmission (304).

4. Dispositif (300) selon la revendication précédente, **caractérisé en ce que** chaque module de dérivation (305) comporte une première ligne de dérivation (306) comprenant une première résistance de dérivation (R1) et une deuxième ligne de dérivation (307) comprenant une deuxième résistance de dérivation (R2) en série avec une capacité de dérivation (C1), disposées en parallèle avec les moyens d'isolation (301) sur chaque ligne de transmission (303 ;304).

5. Dispositif (300) selon la revendication précédente, **caractérisé en ce que** la première résistance de dérivation (R1) a une valeur avoisinant 100 kiloOhms.

**6.** Dispositif (300) selon l'une des revendications 4 ou 5, **caractérisé en ce que** la deuxième résistance de dérivation (R2) a une valeur avoisinant 10 kiloOhms.

**7.** Dispositif (300) selon l'une des revendications 4 à 6, **caractérisé en ce que** la capacité de dérivation (C1) a une valeur avoisinant 150 nanofarads.

**8.** Dispositif (300) selon l'une des revendications précédentes, **caractérisé en ce que** la résistance d'entrée (R3) de chaque liaison de gâchette (302) a une valeur avoisinant 2,2 kiloOhms.

**9.** Dispositif (300) selon la revendication précédente, **caractérisé en ce que**

- les diodes Zener présentent une tension de claquage de l'ordre de 2,7 Volts,
- le triac se déclenche avec un courant de gâchette de l'ordre de 1 milliAmpère.

**Claims**

**1.** A filtering device (300) for a narrow band terminal in a private installation, connected by a telephone line (L) comprised of a first transmission line (303) and a second transmission line (304), to an access network that can simultaneously circulate, between a telephone exchange (C) and a subscriber (A) equipped with at least one narrow band terminal, first signals corresponding to narrow band and/or digital services, and second signals corresponding to broadband services, said device (300) comprising means of low pass filtering (L1; C2), means of insulation (301) such that the device (300) has a high input impedance to be insulated from the network when the narrow band terminal is hung up, and means of derivation (305) to allow through ringing signals and/or service signals when the narrow band terminal is hung up, the means of insulation (301) comprising groups of components (DZ; R3; TR) designed to cause a drop in voltage on the telephone line (L) of less than four volts,
**characterized in that**

- said groups of components are identical non-linear devices, each incorporating
- a triac (TR) placed directly on the transmission line with said non-linear device to which it belongs, and,
- in parallel with said triac, a connection (302) connecting an output of said triac to an input of said triac, said connection comprising a sensitive trigger for said triac, said connection having two Zener diodes (DZ) positioned lengthwise and an input resistance (R3).

**2.** A device (300) according to the previous claim, **characterized in that** the non-linear devices are four in number, positioned on each of the transmission lines (303; 304) in sequence and symmetrically with respect to a capacity (C2) of means of low-pass filtering, said capacity (C2) being positioned on a connection (308) connecting the first transmission line (303) and the second transmission line (304).

**3.** A device (300) according to any one of the previous claims, **characterized in that** the means of derivation (305) are comprised of a first module of derivation and a second module of derivation, positioned respectively on the first transmission line (303) and on the second transmission line (304).

**4.** A device (300) according to the previous claim, **characterized in that** each module of derivation (305) has a first line of derivation (306) with a first derivation resistance (R1) and a second line of derivation (307) with a second derivation resistance (R2) in sequence with a derivation capacity (C1), arranged in parallel with the means of insulation (301) on each transmission line (303; 304).

**5.** A device (300) according to the previous claim, **characterized in that** the first derivation resistance (R1) has a value of around 100 kiloohms.

**6.** A device (300) according to any one of claims 4 or 5, **characterized in that** the second derivation resistance (R2) has a value of around 10 kiloohms.

**7.** A device (300) according to any one of claims 4 to 6, **characterized in that** the derivation capacity (C1) has a value of around 150 nanofarads.

**8.** A device (300) according to any one of the previous claims, **characterized in that** the input resistance (R3) of each trigger connection (302) has a value of around 2.2 kiloohms.

9. A device (300) according to the previous claim, **characterized in that**

      - the Zener diodes have a breakdown voltage of around 2.7 volts,
      - the triac fires with a trigger current of around 1 milliampere.

**Patentansprüche**

1. Filterungseinrichtung (300) für ein schmalbandiges Endgerät in eine private Einrichtung, mit einer Telefonleitung (L), welche eine erste Signalleitung (303) und eine zweite Signalleitung (304) aufweist und, die an ein Zugangsnetz angeschlossen ist, das imstande ist zwischen einer Telefonzentrale (C) und einem Anschlussinhaber (A), der mindestens mit einem schmalbandigen Endgerät ausgestattet ist, erste Signale, die analogen und/oder digitalen schmalbandigen Dienstleistungen entsprechen und zweite Signale die breitbandige Dienstleistungen entsprechen gleichzeitig durchzuleiten, wobei die genannte Einrichtung (300) Tiefpassfilterungsmitteln (L1; C2), Isolationsmitteln (301) so, dass die Einrichtung (300) eine hohe Eingansimpedanz hat, um vom Netz isoliert zu werden, wenn das schmaldandiges Endgerät im eingehängten Zustand ist und Umgehungsmitteln (305), um Klingel- und/oder Betriebssignale durchzulassen, wenn das schmalbandiges Endgerät im einhängten Zustand ist, aufweist, die Isolationsmitteln (301) bestehen aus Bauteilgruppen (DZ ;R3 ;TR) angepasst, um einen Spannungsabfall an die Telefonleitung (L) unter vier Volt zu bewirken,
**dadurch gekennzeichnet dass**,

      - die genannten Bauteilgruppen gleichartigen nichtlinearen Einrichtungen sind beinhaltend jeweils
      - einen Triac (TR) direkt an die Signalleitung auf welche sich die nichtlineare Einrichtung befindet zu wem der Triac gehört, angebracht ist, und
      - Parallel zum genannten Triac angeordnet, einen Anschluss (302), der einen Auslass des genannten Triacs an einen Einlass des genannten Triacs verbindet, wobei der genannte Anschluss einen empfindlichen Steueranschluss des genannten Triacs bildet und wobei der genannte Anschluss aus zwei entgegengesetzte Zenerdiode (DZ) und einen Eingangswiderstand (R3) besteht.

2. Einrichtung (300) nach dem vorherigen Anspruch, **dadurch gekennzeichnet, dass** die Anzahl der nichtlinearen Einrichtungen vier ist, auf jede der Signalleitungen (303; 304) in Serie angeordnet und symmetrisch zu einer Kapazität (C2) der Tiefpassfilterungsmitteln, wobei die genannte Kapazität (C2) an einen Anschluss (308) angeordnet ist, der die erste Signalleitung (303) und die zweite Signalleitung (304) verbindet.

3. Einrichtung (300) nach einem der vorherigen Ansprüche, **dadurch gekennzeichnet, dass** die Umgehungsmitteln (305) von einem ersten Bypass-Modul und einem zweiten Bypass-Modul gebildet ist, diese Modulen sind jeweils an die erste Signalleitung (303) und an die zweite Signalleitung (304) angeordnet.

4. Einrichtung (300) nach dem vorherigen Anspruch, **dadurch gekennzeichnet, dass** jeden Bypass-Modul (305) aus eine erste Umgehungsleitung (306), die einen ersten Umgehungswiderstand (R1) aufweist und eine zweite Umgehungsleitung (307), die einen zweiten Umgehungswiderstand (R2) in Serie mit einer Umgehungskapazität (C1) aufweist, die parallel mit die Isolationsmitteln (301) an jede Signalleitung (303; 304) angeordnet sind, besteht.

5. Einrichtung (300) nach dem vorherigen Anspruch, **dadurch gekennzeichnet, dass** der erste Umgehungswiderstand (R1) eine Wert von etwa 100 Kiloohms hat.

6. Einrichtung (300) nach einem der Ansprüche 4 oder 5, **dadurch gekennzeichnet, dass** die zweite Umgehungswiderstand (R2) eine Wert von etwa 10 Kiloohms hat.

7. Einrichtung (300) nach einem der Ansprüche 4 oder 6, **dadurch gekennzeichnet, dass** die Umgehungskapazität (C1) eine Wert von etwa 150 Nanofarads hat.

8. Einrichtung (300) nach einem der vorherigen Ansprüche, **dadurch gekennzeichnet, dass** der Eingangswiderstand (R3) von jedem Anschluss eines Steueranschlusses (302) eine Wert von etwa 2,2 Kiloohms hat.

9. Einrichtung (300) nach dem vorherigen Anspruch, **dadurch gekennzeichnet, dass**

- die Zenerdioden eine Durchbruchsspannung in einem Bereich von 2, 7 Volts aufweist,
- der Triac sich mit einem Gate-Strom in einem Bereich von 1 Milliampere auslöst.

## Fig. 1

Spectre de puissance

100

102

Spectre vocal

103

104

105

101

4khz  32khz

4,3khz

106

106

1,1Mhz

Echelle des frequences

## Fig. 2

208

207  201  210

202  205  206

204

HF

200

L

Filtre à aiguillage

Filtre à aiguillage

D S L A M

Internet

BF

211

203

209

Fig. 3

12

## RÉFÉRENCES CITÉES DANS LA DESCRIPTION

**Documents brevets cités dans la description**

- WO 0065819 A
- WO 0106737 A